(19) Europäisches Patentamt

European Patent Office

Office européen des brevets

(11) **EP 1 046 890 A1**

(12) **DEMANDE DE BREVET EUROPEEN**

(43) Date de publication:
**25.10.2000 Bulletin 2000/43**

(51) Int Cl.⁷: **G01K 7/01**, G01K 3/00

(21) Numéro de dépôt: **99107888.2**

(22) Date de dépôt: **21.04.1999**

(84) Etats contractants désignés:
**AT BE CH CY DE DK ES FI FR GB GR IE IT LI LU MC NL PT SE**
Etats d'extension désignés:
**AL LT LV MK RO SI**

(71) Demandeur: **EM Microelectronic-Marin SA
2074 Marin (CH)**

(72) Inventeur: **Descombes, Arthur
3210 Kerzers (CH)**

(74) Mandataire: **Thérond, Gérard Raymond et al
I C B
Ingénieurs Conseils en Brevets SA
Rue des Sors 7
2074 Marin (CH)**

(54) **Circuit de détection d'un niveau de température**

(57) L'invention concerne un circuit de détection d'un niveau de température comportant des moyens (B1, B2, B3, 11, 12, 21, 31, 32) pour produire des tensions de diode ($V_{BE1}$ à $V_{BE5}$) et des moyens de calcul comportant des éléments capacitifs (51, 52, 53) et des organes de commutation (SW1 à SW4) adaptés pour relier sélectivement et séquentiellement, au cours de première et seconde phases, les éléments capacitifs aux moyens produisant les tensions de diode ($V_{BE1}$ à $V_{BE5}$). Au cours de la seconde phase, les moyens de calcul produisent un signal de température représentatif du niveau de température étant supérieur ou inférieur à un seuil de température déterminé ($T_{LIMIT}$) et défini comme la valeur de température pour laquelle l'expression $\alpha_1 (V_{BE2} - V_{BE1}) + \alpha_2 (V_{BE3} + \alpha_3 (V_{BE5} - V_{BE4}))$ s'annule, où $\alpha_1$, $\alpha_2$ et $\alpha_3$ sont des premier, second et troisième coefficients de proportionnalité déterminés par les valeurs des éléments capacitifs.

Fig. 2

EP 1 046 890 A1

## Description

La présente invention concerne un circuit de détection d'un niveau de température. En particulier, la présente invention est relative à un circuit de détection permettant de produire un signal de température représentatif d'une température étant supérieure ou inférieure à un seuil de température déterminé.

Le circuit de détection selon la présente invention est notamment destiné à être utilisé dans un circuit de protection pour batterie.

Des circuits permettant de comparer une tension à une tension de référence, stable en température, sont connus de l'homme du métier. On connaît en particulier du brevet suisse CH 639 521 un circuit détecteur de niveau de tension servant notamment à indiquer l'approche de la fin de vie de piles pour des pièces d'horlogerie électroniques ou électromécaniques.

Le circuit détecteur de niveau de tension décrit dans ce brevet permet de comparer une tension d'entrée, à savoir la tension aux bornes de la pile, à un niveau de référence, et comporte, d'une part, des moyens pour produire une première, une seconde et une troisième tension de diode constitués par des transistors bipolaires branchés en diodes, en série avec des sources de courant, et d'autre part des moyens de calcul comprenant des éléments capacitifs et des organes de commutation pour relier sélectivement et séquentiellement, au cours d'une première et d'une seconde phase, les éléments capacitifs aux moyens produisant les tensions de diode et à une entrée du circuit à laquelle est appliquée la tension d'entrée. Les moyens de calcul fournissent, au cours de la seconde phase, un signal représentatif de la différence entre la tension d'entrée et le niveau de référence défini à partir de la somme de la première tension de diode et du produit de la différence entre les deuxième et troisième tensions de diode par un coefficient déterminé.

Un but de la présente invention est de réaliser un circuit de détection d'un seuil de température permettant de comparer une tension représentative de la température du circuit à un niveau de référence.

A cet effet, la présente invention a pour objet un circuit de détection d'un niveau de température dont les caractéristiques sont énumérées à la revendication 1.

Un avantage de la présente invention réside dans le fait que le seuil de température du circuit de détection selon la présente invention peut être ajusté aisément et précisément.

D'autres caractéristiques et avantages de l'invention apparaîtront plus clairement à la lecture de la description détaillée qui suit, faite en référence aux dessins annexés donnés à titre d'exemples non limitatifs et dans lesquels :

- la figure 1 est un diagramme de l'évolution en fonction de la température d'une tension de diode permettant d'expliquer le principe général de fonctionnement du circuit de détection selon l'invention;
- la figure 2 est un exemple de réalisation du circuit de détection selon l'invention;
- la figure 3 est un diagramme d'évolution en fonction de la température permettant d'expliquer le fonctionnement du circuit de détection de la figure 2; et
- la figure 4 est un autre exemple de réalisation du circuit de détection selon l'invention.

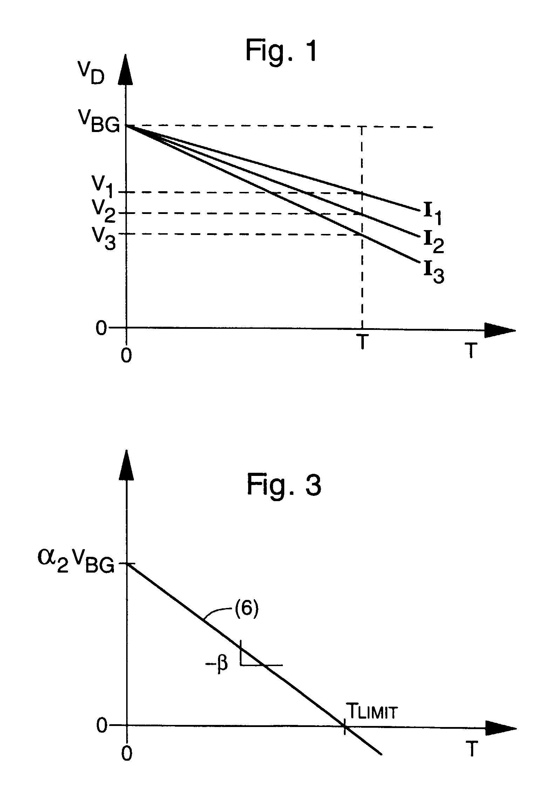

On expliquera brièvement le principe général de fonctionnement du circuit de détection de l'invention au moyen du diagramme de la figure 1 qui représente l'évolution, en fonction de la température, de la tension $V_D$ aux bornes d'une diode constituée par la jonction base-émetteur d'un transistor bipolaire pour trois valeurs $I_1$, $I_2$ et $I_3$ du courant qui la traverse.

Cette tension possède ainsi une caractéristique d'évolution linéaire présentant un coefficient de température négatif, c'est-à-dire qu'elle décroît linéairement lorsque la température augmente. Lorsque T tend vers $O^\circ$ K, cette tension de diode tend vers une valeur $V_{BG}$ dénommée valeur bandgap. Dans le cas du silicium, cette valeur bandgap équivaut environ à 1,205 Volts. Cette tension de diode est sensiblement égale à :

$$V_D = V_{BG} - kT/e \ \ln (I_0/I) \tag{1}$$

où k est la constante de Boltzmann, e la charge de l'électron et $I_0$ une valeur dépendant notamment de la surface du dispositif et des concentrations équivalentes des états de conduction et de valence du matériau dopé.

La valeur $I_0$ est très supérieure à celle du courant qui traverse la diode; bien qu'elle dépende de la technologie de fabrication du transistor et faiblement de la température, on peut considérer que le facteur $\ln (I_0/I)$ reste sensiblement constant pour un courant I donné.

Si l'on fait passer successivement, dans une même diode ou dans deux diodes identiques, à une même température, deux courants différents $I_1$ et $I_2$, la différence entre les tensions qui apparaissent à ses bornes ou à leurs bornes est égale à :

$$\Delta V_{21} = V_2 - V_1 = kT/e \ln (I_2/I_1) \qquad (2)$$

Cette différence est directement dépendante de la température est présente un coefficient de température positif ou négatif selon que le courant $I_2$ est supérieur ou inférieur au courant $I_1$.

Par ailleurs, en ajoutant une tension proportionnelle à cette différence à une tension de diode $V_3$ produite par le passage d'un courant $I_3$, pour une même température on obtient :

$$V_3 + \alpha \Delta V_{21} = V_{BG} - kT/e (\ln (I_0/I_3) - \alpha \ln (I_2/I_1)) \qquad (3)$$

Par un choix adéquat du coefficient de proportionnalité a tel que l'on ait :

$$\ln (I_0/I_3) - \alpha \ln (I_2/I_1) = 0 \qquad (4)$$

la quantité $V_3 + \alpha \Delta V_{21}$ peut ainsi être rendue indépendante de la température et équivaut alors à la valeur bandgap $V_{BG}$.

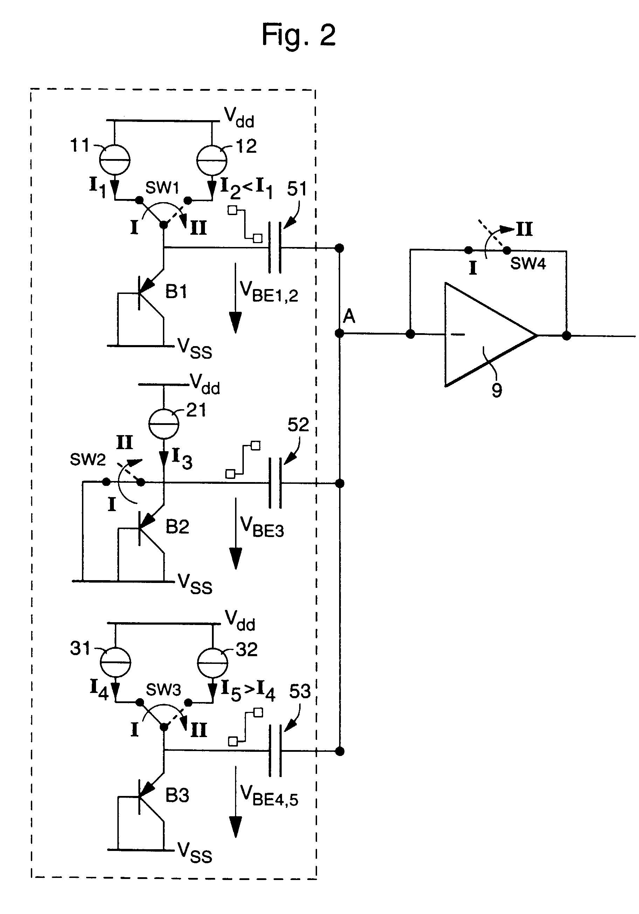

La figure 2 représente un premier exemple de réalisation du circuit de détection d'un niveau de température selon la présente invention. Ce circuit comporte trois transistors bipolaires B1, B2, B3 de type PNP branchés en diode, c'est-à-dire dont la base et le collecteur sont reliés ensemble, eux-mêmes reliés à l'une des bornes d'alimentation du circuit sur laquelle est appliqué un potentiel $V_{ss}$ que l'on considéra, dans la suite de la description, comme constituant la masse du circuit de détection. Les transistors bipolaires B2 et B3 sont choisis sensiblement identiques.

Des première et une seconde sources de courants 11 et 12 produisant respectivement des courants $I_1$ et $I_2$ sont disposées entre l'émetteur du transistor B1 et l'autre borne d'alimentation du circuit sur laquelle est appliqué un potentiel positif $V_{dd}$. Ces sources de courant 11 et 12 sont reliées sélectivement à l'émetteur du transistor B1 au moyen d'un commutateur SW1 de sorte que la jonction base-émetteur du transistor B1 est traversée sélectivement par les courants $I_1$ ou $I_2$ lorsque le commutateur SW1 est en position "I", indiquée par les traits pleins, ou en position "II", indiquée par les pointillés. Des première et seconde tensions de diode $V_{BE1}$ et $V_{BE2}$ sont ainsi successivement produites.

Une troisième source de courant 21 est disposée entre l'émetteur du transistor B2 est la borne d'alimentation du circuit sur laquelle est appliqué le potentiel Vdd. Cette source de courant 21 maintient un courant $I_3$ constant au travers de la jonction base-émetteur du transistor B2. Un commutateur SW2 est par ailleurs disposé entre l'émetteur du transistor B2 et la masse du circuit. Lorsque ce commutateur SW2 est en position "I", l'émetteur du transistor B2 est ainsi relié à la masse du circuit. Dans le cas contraire, lorsque ce commutateur est en position "II", la jonction base-émetteur est traversée par le courant $I_3$ et une troisième tension de diode $V_{BE3}$ est produite.

Des quatrièmes et cinquièmes sources de courants 31 et 32 produisant respectivement des courants $I_4$ et $I_5$ sont en outre disposées entre la borne $V_{dd}$ du circuit et l'émetteur du transistor B3. Ces sources de courant 31 et 32 sont reliées sélectivement à l'émetteur du transistor B3 au moyen d'un commutateur SW3 de sorte que la jonction base-émetteur du transistor B3 est traversée sélectivement par les courants $I_4$ ou $I_5$ lorsque le commutateur SW3 est en position "I" ou "II". Des quatrième et cinquième tensions de diode $V_{BE4}$ et $V_{BE5}$ sont ainsi successivement produites.

Les courants $I_1$ et $I_5$ sont déterminés de sorte qu'il soient respectivement supérieurs aux courant $I_2$ et $I_4$.

Le circuit de la figure 2 comporte en outre trois éléments capacitifs 51, 52 et 53 reliés respectivement par l'une de leurs bornes aux émetteur des transistors B1, B2 et B3. Les autres bornes des éléments capacitifs 51, 52 et 53 sont reliées ensemble à un noeud A à l'entrée inverseuse d'un amplificateur 9 à gain très élevé. Un commutateur SW4 permet de relier ou non la sortie de l'amplificateur 9 à son entrée. Les éléments capacitifs 51, 52, 53 ont respectivement des valeurs de capacité C1, C2, C3.

Dans un première phase, les commutateurs SW1, SW2, SW3, SW4 sont placés en position "I" représentée en trait plein sur la figure. L'amplificateur 9 est alors soumis à une contre-réaction totale et se polarise automatiquement à un point de fonctionnement stable, sa tension d'entrée $V_E$ étant alors égale à sa tension de sortie et son gain maximal. Les éléments capacitifs 51, 52, 53 se chargent ainsi respectivement aux tensions ($V_E - V_{BE1}$), $V_E$, et ($V_E - V_{BE4}$).

Dans une deuxième phase, lorsque les commutateurs SW1, SW2, SW3, SW4 sont placés en position "II" représentée en pointillés sur la figure, les éléments capacitifs 51, 52, 53 injectent dans le noeud A d'entrée de l'amplificateur 9, laissé flottant, des charges électriques respectivement égale à C1 ($V_{BE2}$- $V_{BE1}$), C2 $V_{BE3}$ et C3 ($V_{BE5}$- $V_{BE4}$), la charge injectée par l'élément 51 étant de signe contraire aux charges injectées par les éléments 52 et 53.

La charge totale injectée dans le noeud A peut être exprimée sous la forme suivante :

$$\alpha_1 \left( V_{BE2} - V_{BE1} \right) + \alpha_2 \left( V_{BE3} + \alpha_3 \left( V_{BE5} - V_{BE4} \right) \right) \qquad (5)$$

où $\alpha_1$ = C1, $\alpha_2$ = C2 et $\alpha_3$ = C3/C2.

Par un choix adéquat des valeurs C2 et C3 des éléments capacitifs 52 et 53, conformément au principe décrit plus haut (conformément aux expressions (3) et (4) avec $\alpha = \alpha_3$ = C3/C2), la deuxième partie de l'expression peut-être rendue indépendante de la température et égale à la valeur $\alpha_2$ $V_{BG}$. L'expression (5) peut alors être exprimée comme suit :

$$\alpha_2 \, V_{BG} - \beta \, T \qquad (6)$$

où $\beta$ est un coefficient de température défini positif déterminé essentiellement par le rapport logarithmique des courants $I_1$ et $I_2$ traversant la jonction base-émetteur du transistor B1 et valant :

$$\beta = \alpha_1 \, k/e \, \ln \left( I_1/I_2 \right) \qquad (7)$$

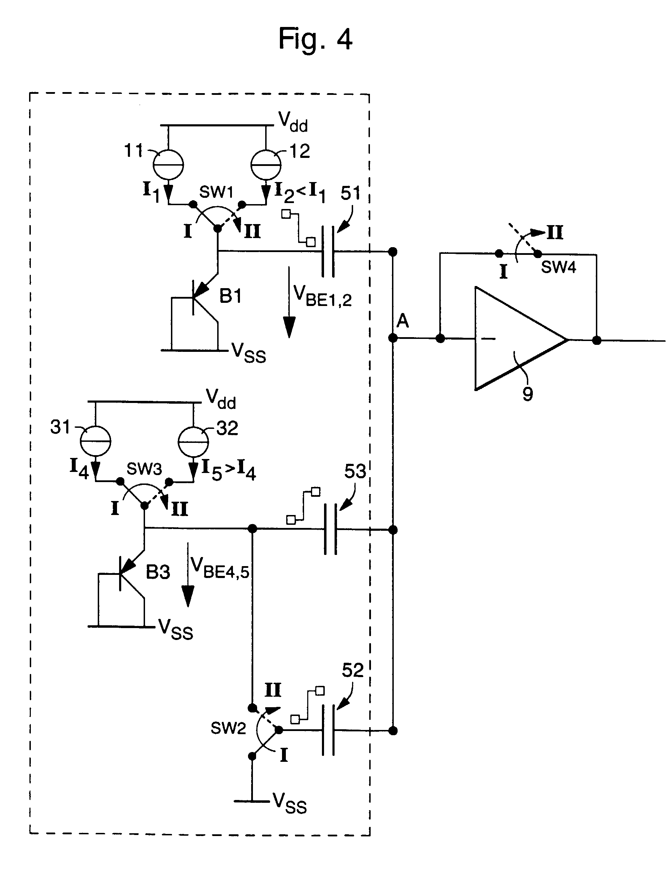

La figure 3 représente un diagramme illustrant l'évolution de la charge transmise dans le noeud A d'entrée de l'amplificateur 9 en fonction de la température T correspondant à l'expression (6) ci-dessus.

On constate dans ce diagramme que la charge totale transmise dans le noeud A de l'amplificateur 9 s'annule à une température $T_{LIMIT}$ définie par les coefficients $\alpha_1$ et $\alpha_2$, à savoir les valeurs C1 et C2 des éléments capacitifs 51 et 52, la valeur de bandgap $V_{BG}$ et le coefficient $\beta$ défini ci-dessus qui dépend, comme on l'a déjà mentionné du rapport logarithmique des courants $I_1$ et $I_2$ traversant la jonction base-émetteur du transistor B1. En conséquence, il n'apparaît aucun signal à l'entrée de l'amplificateur 9 lorsque la température est égale à $T_{LIMIT}$.

Par contre, si la température diffère du seuil de température $T_{LIMIT}$, il apparaît à l'entrée de l'amplificateur une variation de tension dont la polarité est représentative du signe de la charge totale injectée dans le noeud A d'entrée. Ce signal est amplifié et inversé par l'amplificateur 9 qui fournit un signal de sortie d'amplitude très supérieure à celle du signal appliqué à son entrée. Ce signal de sortie de l'amplificateur 9, de niveau logique, peut ainsi être utilisé comme signal de commande, afin, par exemple, de protéger un circuit contre des dégâts occasionnés par des températures de fonctionnement trop élevées.

Par ailleurs, on constate de ce qui précède que le circuit selon la présente invention présente l'avantage de pouvoir ajuster aisément et précisément le seuil de température $T_{LIMIT}$ du circuit de détection. Il est en effet très aisé de réaliser en technologie MOS des rapports de capacités très précis pour les éléments capacitifs.

D'autre part, tel que cela ressort des expressions (6) et (7) ci-dessus, il est en outre possible d'ajuster le seuil de température $T_{LIMIT}$ en agissant sur le rapport de courants $I_1$ et $I_2$. En effet, la valeur du coefficient $\beta$ rentrant dans l'expression (6) ci-dessus dépend directement du rapport logarithmique des courants $I_1$ et $I_2$ délivrés par les sources de courant 11 et 12. Il est ainsi possible, pour autant que le courant délivré par l'une des sources de courant 11 ou 12 puisse être ajusté, d'adapter le seuil de température $T_{LIMIT}$, et ceci même après programmation des éléments capacitifs 51, 52 et 53. On dispose ainsi avec le circuit de détection selon la présente invention d'une grande flexibilité d'ajustement de la valeur du seuil de température $T_{LIMIT}$.

Le circuit selon la présente invention fonctionne en outre de façon très rapide, le temps nécessaire au calcul et à la comparaison étant essentiellement consacré à la phase de charge de éléments capacitifs et de polarisation de l'amplificateur.

De plus, l'amplificateur 9 ne sert en fait qu'à amplifier suffisamment le signal apparaissant au noeud A d'entrée de sorte que le signal de sortie puisse attaquer correctement un autre circuit. On peut donc se contenter d'utiliser un amplificateur à un seul étage réalisé, à la manière d'un inverseur, par deux transistors complémentaires montés en source commune dont les drains sont reliés entre eux.

On peut remarquer dans ce qui précède qu'il n'est pas nécessaire de produire effectivement les trois tensions $V_{BE3}$, $V_{BE4}$ et $V_{BE5}$, deux tensions suffisent. Il est ainsi possible de s'affranchir du transistor B2, et d'utiliser comme troisième tension de diode $V_{BE3}$, la tension de diode $V_{BE5}$ produite par le transistor B3 lors de la seconde phase.

La figure 4 présente un exemple d'un tel circuit où l'on s'est affranchi du transistor B2 et de la source de courant 21 associée. Dans cet exemple, l'élément capacitif 52 est ainsi connecté, par l'intermédiaire du commutateur SW2 tout d'abord à la masse du circuit lors de la première phase puis, lors de la deuxième phase, à l'émetteur du transistor B3.

**Revendications**

1. Circuit de détection d'un niveau de température adapté pour produire un signal de température représentatif dudit niveau de température étant supérieur ou inférieur à un seuil de température déterminé ($T_{LIMIT}$), ce circuit étant caractérisé par le fait qu'il comporte :

   - des moyens pour produire des tensions de diode ($V_{BE1}$ à $V_{BE5}$); et
   - des moyens de calcul pour produire ledit signal de température, ces moyens de calcul comportant des éléments capacitifs (51, 52, 53) et des organes de commutation (SW1 à SW4) adaptés pour relier sélectivement et séquentiellement, au cours d'une première et d'une seconde phase, lesdits éléments capacitifs (51, 52, 53) auxdits moyens pour produire lesdites tensions de diode ($V_{BE1}$ à $V_{BE5}$) de sorte que lesdits moyens de calcul produisent ledit signal de température au cours de ladite seconde phase, ledit seuil de température ($T_{LIMIT}$) étant défini comme la valeur de température pour laquelle l'expression $\alpha_1$ ($V_{BE2}$- $V_{BE1}$) + $\alpha_2$ ($V_{BE3}$ + $\alpha_3$ ($V_{BE5}$-$V_{BE4}$)) s'annule, où $\alpha_1$, $\alpha_2$ et $\alpha_3$ sont des premier, second et troisième coefficients de proportionnalité déterminés par les valeurs desdits éléments capacitifs et $V_{BE1}$ à $V_{BE5}$ sont des première, seconde, troisième, quatrième et cinquième tensions de diodes, la troisième tension de diode $V_{BE3}$ pouvant être égale à l'une quelconque des autres tensions de diodes $V_{BE1}$, $V_{BE2}$, $V_{BE4}$ ou $V_{BE5}$.

2. Circuit de détection selon la revendication 1, caractérisée par le fait que lesdits moyens de calculs sont agencés pour produire :

   - un premier signal dépendant de la température représentatif du produit par ledit premier coefficient de proportionnalité $\alpha_1$ de la différence entre les première et seconde tensions de diode ($V_{BE1}$ et $V_{BE2}$), et
   - un second signal indépendant de la température représentatif du produit par ledit second coefficient de proportionnalité $\alpha_2$ de la somme de ladite troisième tension de diode ($V_{BE3}$) et du produit par ledit troisième coefficient de proportionnalité $\alpha_3$ de la différence entre lesdites quatrième et cinquième tensions de diode ($V_{BE4}$ et $V_{BE5}$).

3. Circuit de détection selon la revendication 2, caractérisé par le fait que lesdits moyens de calcul sont agencés pour produire :

   - un troisième signal représentatif du produit de ladite troisième tension de diode ($V_{BE3}$) par ledit second coefficient de proportionnalité $\alpha_2$, et
   - un quatrième signal représentatif du produit de la différence entre lesdites quatrième et cinquième tensions de diode ($V_{BE4}$ et $V_{BE5}$) par lesdits second et troisième coefficients de proportionnalité $\alpha_2$ et $\alpha_3$,

   ces troisième et quatrième signaux étant additionnés pour produire ledit second signal.

4. Circuit de détection selon la revendication 3 caractérisé par le fait que lesdits moyens de calcul comportent :

   - pour produire ledit premier signal, un premier élément capacitif (51) de capacité sensiblement égale audit premier coefficient de proportionnalité $\alpha_1$,
   - pour produire ledit troisième signal, un second élément capacitif (52) de capacité sensiblement égale audit second coefficient de proportionnalité $\alpha_2$, et
   - pour produire ledit quatrième signal, un troisième élément capacitif (53) de capacité sensiblement égale au produit desdits second et troisième coefficient de proportionnalité $\alpha_2$ et $\alpha_3$.

5. Circuit de détection selon l'une quelconque des revendications précédentes, caractérisé par le fait que lesdits moyens pour produire lesdites tensions de diode ($V_{BE1}$ à $V_{BE5}$) comportent des transistors bipolaires branchés en série avec des sources de courants et dont la base est reliée au collecteur.

6. Circuit de détection selon la revendication 4, caractérisé par le fait que lesdits moyens pour produire lesdites tensions de diode ($V_{BE1}$ à $V_{BE5}$) comportent trois transistors bipolaires (B1, B2, B3) dont la base est reliée au collecteur, des premier (B1) et second (B3) desdits transistors étant chacun branché successivement en série avec deux sources de courant (11, 12 et 31, 32), un troisième (B2) desdits transistors étant branché en série avec une source de courant (21), les second et troisième transistor (B2, B3) étant sensiblement identiques.

7. Circuit de détection selon la revendication 4, caractérisé par le fait que lesdits moyens pour produire lesdites tensions de diode ($V_{BE1}$ à $V_{BE5}$) comportent deux transistors bipolaires (B1, B3) dont la base est reliée au collecteur, chacun desdits transistors étant branché successivement en série avec deux sources de courant (11, 12 et 31, 32).

## Fig. 1

$V_D$

$V_{BG}$

$V_1$

$V_2$

$V_3$

$I_1$

$I_2$

$I_3$

0

0

T

T

## Fig. 3

$\alpha_2 V_{BG}$

(6)

$-\beta$

0

$T_{LIMIT}$

0

T

# Fig. 2

# Fig. 4

**Office européen des brevets**

**RAPPORT DE RECHERCHE EUROPEENNE**

Numéro de la demande

EP 99 10 7888

## DOCUMENTS CONSIDERES COMME PERTINENTS

| Catégorie | Citation du document avec indication, en cas de besoin, des parties pertinentes | Revendication concernée | CLASSEMENT DE LA DEMANDE |
|---|---|---|---|
| D,Y | CH 639 521 A (ÉBAUCHES ÉLECTRONIQUES) 30 novembre 1983 (1983-11-30) * le document en entier * | 1 | G01K7/01 G01K3/00 |
| Y | FREIRE R C S F ET AL: "A HIGHLY LINEAR SINGLE P-N JUNCTION TEMPERATURE SENSOR" IEEE TRANSACTIONS ON INSTRUMENTATION AND MEASUREMENT, vol. 43, no. 2, 1 avril 1994 (1994-04-01), pages 127-131, XP000438867 ISSN: 0018-9456 * figures 2-4 * | 1 | |
| A | GB 2 292 221 A (TEXAS INSTRUMENTS LTD) 14 février 1996 (1996-02-14) * figures * | 1 | |
| A | COUGHLIN R F ET AL: "A SYSTEM APPROACH TO LINEAR SENSOR CIRCUIT DESIGN" ELECTRONIC ENGINEERING, vol. 65, no. 797, 1 mai 1993 (1993-05-01), page 38 XP000362497 ISSN: 0013-4902 * le document en entier * | 1 | DOMAINES TECHNIQUES RECHERCHES G01K G04C |
| A | US 3 825 778 A (AHMED A) 23 juillet 1974 (1974-07-23) * figure 2 * | 1 | |

Le présent rapport a été établi pour toutes les revendications

| Lieu de la recherche | Date d'achèvement de la recherche | Examinateur |
|---|---|---|
| LA HAYE | 13 septembre 1999 | Ramboer, P |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 99 10 7888

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-09-1999

| Document brevet cité au rapport de recherche | | Date de publication | Membre(s) de la famille de brevet(s) | | Date de publication |
|---|---|---|---|---|---|
| CH 639521 | A | 30-11-1983 | DE | 3119048 A | 25-03-1982 |
| | | | HK | 49590 A | 08-07-1990 |
| | | | JP | 1021647 B | 21-04-1989 |
| | | | JP | 1535162 C | 21-12-1989 |
| | | | JP | 57018120 A | 29-01-1982 |
| | | | US | 4424457 A | 03-01-1984 |
| GB 2292221 | A | 14-02-1996 | AUCUN | | |
| US 3825778 | A | 23-07-1974 | AT | 332141 B | 10-09-1976 |
| | | | AT | 108374 A | 15-12-1975 |
| | | | AU | 6525074 A | 07-08-1975 |
| | | | BE | 810742 A | 29-05-1974 |
| | | | CA | 1042531 A | 14-11-1978 |
| | | | DE | 2401978 A | 05-09-1974 |
| | | | DK | 140416 B | 20-08-1979 |
| | | | FR | 2217865 A | 06-09-1974 |
| | | | GB | 1451285 A | 29-09-1976 |
| | | | IT | 1005315 B | 20-08-1976 |
| | | | JP | 992163 C | 27-03-1980 |
| | | | JP | 49118478 A | 12-11-1974 |
| | | | JP | 54029279 B | 21-09-1979 |
| | | | NL | 7401775 A | 13-08-1974 |
| | | | SE | 389236 B | 25-10-1976 |

EPO FORM P0460

Pour tout renseignement concernant cette annexe : voir Journal Officiel de l'Office européen des brevets, No.12/82